# EUROPEAN PATENT SPECIFICATION

(11) **EP 3 639 585 B1**
(45) Date of publication and mention of the grant of the patent: **23.08.2023**
(21) Application number: 17931847.2
(22) Date of filing: 16.11.2017
(51) Int. Cl.: H04W 74/08, H04W 72/04, H04W 24/08, H04W 72/00

(54) **METHOD AND APPARATUS FOR MANAGING BANDWIDTH PARTS**
VERFAHREN UND VORRICHTUNG ZUR VERWALTUNG VON BANDBREITENTEILEN
PROCÉDÉ ET APPAREIL DE GESTION DE PARTIES DE BANDES PASSANTES

(43) Date of publication of application: 22.04.2020
(73) Proprietor: ZTE Corporation, Shenzhen, Guangdong 518057 (CN)
(72) Inventor: CHEN, Zhongming, Shenzhen Guangdong 518057 (CN); HUANG, He, Shenzhen Guangdong 518057 (CN)
(74) Representative: Vossius & Partner Patentanwälte Rechtsanwälte mbB
(86) International application number: PCT/CN2017/111405
(87) International publication number: WO 2019/095222

(56) References cited:
- EP-A1- 3 591 887
- WO-A1-2009/046374
- WO-A1-2017/058283
- CN-A- 102 244 559
- CN-A- 102 845 009
- US-A1- 2008 101 460
- PANASONIC: "Numerology for Msg2 and Msg4 for RRC_CONNECTED UEs", 3GPP DRAFT; R1-1718764, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, CZ; 20171009 - 20171013 8 October 2017 (2017-10-08), XP051341934, Retrieved from the Internet: URL:http://www.3gpp.org/ftp/Meetings_3GPP_ SYNC/RAN1/Docs/ [retrieved on 2017-10-08]
- ERICSSON: "On Bandwidth Parts and Multiple SSBs", 3GPP DRAFT; R2-1711822 - ON BANDWIDTH PARTS AND MULTIPLE SSBS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20171009 - 20171013 8 October 2017 (2017-10-08), XP051343777, Retrieved from the Internet: URL:http://www.3gpp.org/ftp/Meetings_3GPP_ SYNC/RAN2/Docs/ [retrieved on 2017-10-08]

## Description

### TECHNICAL FIELD

This patent document is directed generally to digital wireless communications.

### BACKGROUND

Mobile communication technologies are moving the world toward an increasingly connected and networked society. The rapid growth of mobile communications and advances in technology have led to greater demand for capacity and connectivity. Other aspects, such as energy consumption, device cost, spectral efficiency, and latency are also important to meeting the needs of various communication scenarios. Various techniques, including new ways to provide higher quality of service, are being discussed.

3GPP R1-1718764 relates to methods that RRC_CONNECTED UEs monitor/receive Msg2 and Msg4 to minimize the disturbance of the ongoing DL UE-specific traffic. Document EP 3 591 887 A1, relevant only in respect of novelty, describes an active and a default Bandwidth Part (BWP); a UE may switch to the default BWP if there is no activity on the active BWP, which may reduce power consumption.

### SUMMARY OF PARTICULAR EMBODIMENTS

The invention is specified by the independent claims. Preferred embodiments are defined in the dependent claims.

This document discloses methods, systems, and devices related to digital wireless communication, and more specifically, to techniques related to the management of bandwidth parts (BWPs) by a user equipment (UE).

### BRIEF DESCRIPTION OF THE DRAWINGS

FIG. 1A shows an exemplary diagram of Carrier Aggregation (CA) in Long Term Evolution (LTE) systems.
FIG. 1B shows an exemplary diagram of multiple cells serving one or more user equipment in the network.
FIG. 2A shows a schematic diagram of using bandwidth parts (BWPs) to reduce user equipment (UE) bandwidth capability.
FIG. 2B shows a schematic diagram of using BWP adaptation to reduce UE energy consumption.
FIG. 2C shows a schematic diagram of using BWPs for frequency domain multiplexing of different numerologies.
FIG. 2D shows a schematic diagram of using BWPs to enable non-contiguous spectrum.
FIG. 3 is a flow chart representation of a method for wireless communication that can be implemented at a UE.
FIG. 4 is another flow chart representation of a method for wireless communication that can be implemented at a UE.
FIG. 5 is a flow chart representation of a method for wireless communication that can be implemented at a base station.
FIG. 6 shows some exemplary steps for a UE to manage BWPs when an activation of a cell fails.
FIG. 7 shows some exemplary steps for a UE to manage BWPs when a time alignment timer (TAT) expires.
FIG. 8 shows some exemplary steps for a UE to manage BWPs when it exceeds a maximum number of scheduling request (SR) transmission attempts.
FIG. 9 shows some exemplary steps for a UE to manage BWPs when there is a lack of resources in the active BWP.
FIG. 10 shows some exemplary steps for a UE to manage BWPs when a cell is activated multiple times by the base station.
FIG. 11 shows some exemplary steps for a UE to manage BWPs when a Random Access Channel (RACH) procedure fails.
FIG. 12 shows some exemplary steps for a UE to manage BWPs when it receives a handover command from the base station.
FIG. 13 shows an example of a wireless communication system where techniques in accordance with one or more embodiments of the present technology can be applied.
FIG. 14 is a block diagram representation of a portion of a radio station.

### DETAILED DESCRIPTION

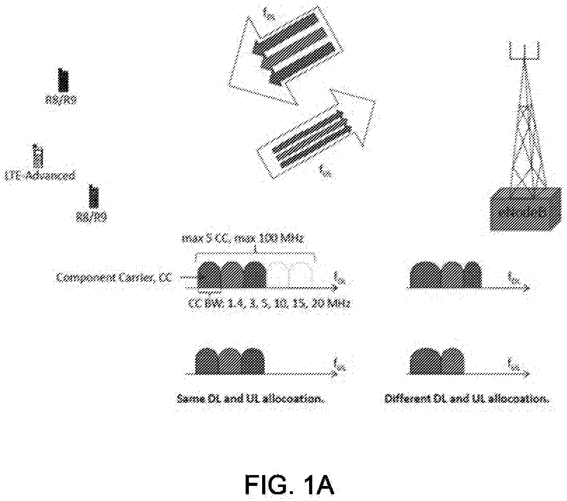

In Long Term Evolution (LTE) systems, Carrier Aggregation (CA) was introduced to provide higher data rates to mobile users. Each aggregated carrier is referred to as a component carrier (CC). As shown in FIG. 1A, in Frequency Division Duplex (FDD), the number of aggregated carriers can be different in downlink (DL) and uplink (UL). The individual component carriers can also be of different bandwidths.

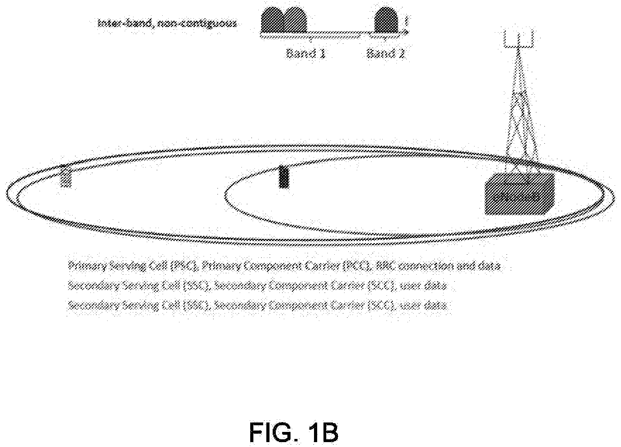

When carrier aggregation is used, there are a number of serving cells, one for each component carrier. The coverage of the serving cells may differ. FIG. 1B shows an exemplary diagram of multiple cells serving UEs in the network. In some embodiments, the Radio Resource Control (RRC) connection is handled by one cell - the Primary serving cell (PCell) - served by the Primary Component Carrier (PCC). The other component carriers are all referred to as Secondary Component Carriers (SCCs), serving the Secondary serving cells (SCells). The SCCs are added and removed as required, while the PCC is only changed at handover.

The development of the new generation of wireless communication - 5G New Radio (NR) communication - is a part of a continuous mobile broadband evolution process to meet the requirements of increasing network demand. NR will provide greater throughput to allow more users connected at the same time. Other aspects, such as energy consumption, device cost, spectral efficiency, and latency are also important to meeting the needs of various communication scenarios. For example, NR will adopt a unified technology infrastructure to support enhanced mobile broadband (eMBB), mass machine-type communication (mMTC), and ultra-reliability and low-latency business.

In NR, a physical resource block is defined as 12 consecutive subcarriers in the frequency domain. NR also introduced the concept of a carrier bandwidth part (BWP). A carrier bandwidth part is a contiguous subset of the physical resource blocks for a given numerology *µ* on a given carrier. Table 1 shows exemplary Orthogonal Frequency-Division Multiplexing (OFDM) numerologies *µ* supported in NR and their corresponding subcarrier spacing *Δf*. The *µ* and the cyclic prefix for a carrier bandwidth part can be given by higher-layer parameters.

**Table 1 Exemplary numerologies**

| *µ* | Δ*f* = 2*^{µ} ·*15[kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |
| 5 | 480 | Normal |

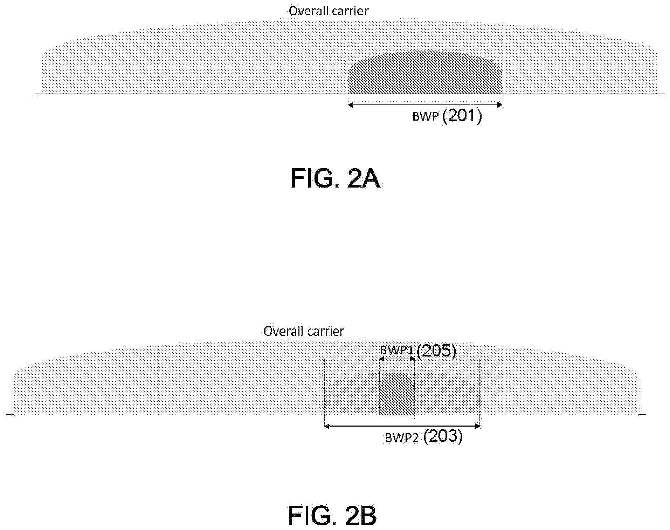

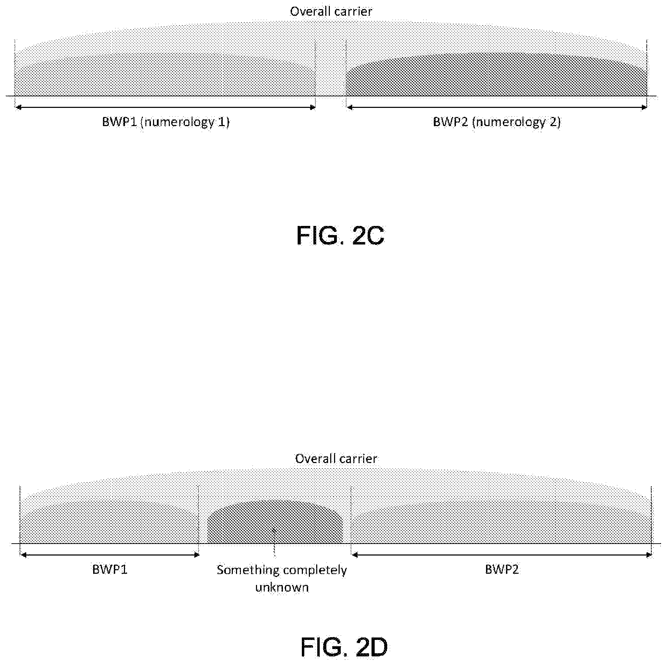

The bandwidth part can be used to support several usage scenarios. For example, as shown in FIG. 2A, BWP allows the use of reduced UE bandwidth capability (e.g., BWP 201). FIG. 2B shows an example of using bandwidth part adaptation to reduce UE energy consumption (e.g., switching from BWP2 203 to BWP1 205 to reduce energy consumption). Frequency domain multiplexing of different numerologies can also be supported, such as shown in FIG. 2C. Similarly, non-contiguous spectrum is enabled by the use of BWPs, as illustrated in FIG. 2D.

This patent document describes techniques directed to the management of the bandwidth parts, and particularly, to how a UE or a base station can determine which BWP(s) to fall back on when a network event occurs or is detected. It is noted that there are three types of BWPs: uplink (UL) BWPs, downlink (DL) BWPs, and UL/DL BWPs. The BWPs in this document refer to all of these three types. That is, a BWP can be either a UP BWP, a DL BWP, or a UL/DL BWP.

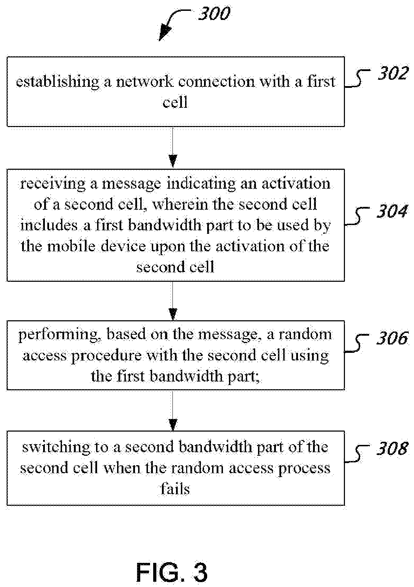

FIG. 3 is a flow chart representation of a method 300 for wireless communication that can be implemented at a UE. The method 300 includes, at 302, establishing a network connection with a first cell. The method 300 then includes, at 304, receiving a message indicating an activation of a second cell. The second cell includes a first bandwidth part to be used by the mobile device upon the activation of the second cell. The second cell further includes a second bandwidth part. The method 300 includes, at 306, performing, based on the message, a random access procedure with the second cell using the first bandwidth part. The method 300 also includes, at 308, switching to a second bandwidth part of the second cell when the random access process fails.

In some embodiments, the first cell can be the primary cell (PCell) for the UE. The UE first establishes a connection with its PCell. It then receives a Downlink Control Information (DCI) message from the base station to activate a secondary cell (SCell). The SCell includes a first active BWP that is pre-configured prior to its activation. The first active BWP may be used by UEs without additional activation when SCell is activated. The SCell may also include a default BWP that can be pre-configured by higher layers or specified in protocols . The UE then initiates a Random Access (RA)/Random Access Channel (RACH) procedure to activate this SCell using the first active BWP. If the RA procedure fails, the UE switches to the default BWP of the SCell and waits for additional message(s) from the base station.

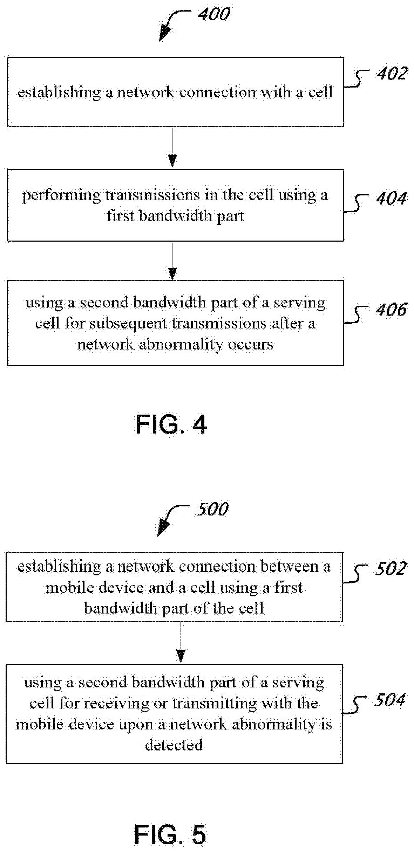

FIG. 4 is another flow chart representation of a method 400 for wireless communication that can be implemented at a UE. The method 400 includes, at 402, establishing a network connection with a cell. The method 400 then includes, 404, performing transmissions in the cell using a first bandwidth part. The method 400 also includes, at 406, using a second bandwidth part of a serving cell for subsequent transmissions after a network event occurs.

In some embodiments, a UE first establishes a network connection with a cell. The UE performs transmissions in the cell using an active BWP. The active BWP can be either the initial active BWP for PCell or the first active BWP for SCell. The active BWP can also be other BWPs that have been activated by the base station subsequent to the activation of the cell. However, if a network event occurs, the UE automatically switches to a second BWP. The second BWP can be an active BWP in a serving cell. For example, the second BWP can be the initial active BWP for PCell, or the first active BWP for SCell. The second BWP can also be the default BWP configured for the cell, or other active BWP(s) of the cell for the UE.

FIG. 5 is a flow chart representation of a method 500 for wireless communication that can be implemented at a base station. The method 500 includes, at 502, establishing a network connection between a mobile device and a cell using a first bandwidth part of the cell. The method 500 also includes, at 504, using a second bandwidth part of a serving cell for receiving or transmitting with the mobile device when a network event is detected.

In some embodiments, a base station first establishes a network connection between a UE and a cell using an active BWP. The active BWP can be either the initial active BWP for PCell or the first active BWP for SCell. The active BWP can also be other BWPs that have been activated by the base station subsequent to the activation of the cell. The base station then switches to a second BWP of a serving cell when it detects that a network event has occurred. The second BWP can be the initial active BWP for PCell, or the first active BWP for SCell. The second BWP can also be the default BWP configured for the cell, or other active BWP(s) of other serving cells(s) for the UE.

Details of the techniques are further described in the following embodiments. In each of the following embodiments, a UE establishes a connection with a primary cell Cell A. Cell A includes three BWPs: p-1, p2, and p-3, in which p-1 is the default BWP and p-2 is the initial active BWP. The current active BWP used for transmissions in Cell A is p-2. As the network traffic increases, the base station determines, based on the measurement reports, to add a secondary cell Cell B for the UE. Cell A and Cell B belong to different timing advance groups (TAGs). Cell B includes four BWPs: s-1, s-2, s-3, and s-4, in which s-3 is the first active BWP and s-1 is the default BWP.

### Example Embodiment 1

This embodiment shows exemplary steps for a UE to manage BWPs when a RACH procedure fails.

In Step 11, the base station decides, based on information such as Buffer State Report (BSR) sent from the UE, to activate Cell B for the UE. The base station sends a downlink control message (e.g., DCI message) to activate Cell B. The first active BWP s-3 will be used by the UE without additional activation.

In Step 12, the base station indicates, over a Physical Downlink Control Channel (PDCCH), that Cell B may initiate a RACH procedure for the UE. In some implementations, the UE can initiate the RACH procedure.

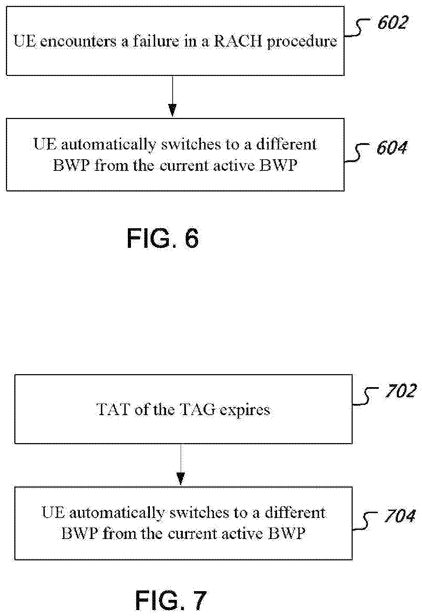

In Step 13, the UE performs the RACH procedure in Cell B. As shown in FIG. 6, however, the UE encounters an error in the RACH procedure at 602. The UE then, at 604, automatically switches to a different BWP from the current active BWP (e.g., s-3). In this particular example, the UE switches to the default BWP s-1 of Cell B. The UE also notifies the higher layer of the failure. This is an example of a RACH failure trigged by an activation of a cell (e.g., Cell B).

It is noted that the RACH procedure can be triggered by other types of events, such as UL data arrivals.

In Step 14, when the base station detects the RACH failure, it can deactivate Cell B. It may also activate other secondary cells based on the measurement reports it receives.

In some embodiments, if there are other cells in the same TAG as Cell B, those cells can also automatically switch to their respective default BWP or first active BWP from the current active BWP when the failure of the RACH procedure occurs.

While the above steps describe a RACH failure of a secondary cell, they are also applicable to a RACH failure of a PCell or a Primary SCell (PSCell).

### Example Embodiment 2

This embodiments shows exemplary steps for a UE to manage BWPs when a time alignment timer (TAT) expires.

In Step 21, the base station decides, based on information such as BSR sent from the UE, to activate Cell B for the UE. The base station sends a downlink control message (e.g., a Medium Access Control (MAC) Control Element (CE)) to activate Cell B. The first active BWP s-3 will be used by the UE without additional activation.

In Step 22, the base station indicates, over a PDCCH, that Cell B may initiate a RACH procedure for the UE. In some implementations, the UE can initiate the RACH procedure.

In Step 23, the UE performs the RACH procedure in Cell B. After the UE receives Random Access Response (RAR), the UE starts a time alignment timer (TAT) for the TAG that Cell B belongs to. The RACH procedure then completes successfully.

In Step 24, after the UE performs transmissions in Cell B for a while, the base station decides, based on information such as BSR sent from the UE, to switch the active BWP to s-4 so that the UE can perform transmissions in a wider frequency band. The UE then switches to s-4 for subsequent transmissions according to base station's indication.

In Step 25, as shown in FIG. 7, UE detects that the TAT for the TAG that Cell B belongs to expires at 702. Because the active BWP in Cell B is s-4, the UE, at 704, automatically switches to a different BWP from s-4 and awaits for the base station's further instructions. In some embodiments, the UE may switch to Cell B's default BWP s-1. In some implementations, the UE may switch to Cell B's first active BWP s-3.

In some embodiments, the base station may restart the TAT based on Tracking Area Code (TAC). In some implementations, the TAG that Cell B belongs to includes multiple cells. When TAT expires, the multiple cells in the same TAG can perform the same operations. For example, all the cells in the same TAG can switch from the active BWP to the respective default BWP or the first active BWP for subsequent transmissions when the TAT expires.

While the above steps describe operations for a secondary cell, they are also applicable to a PCell or a PSCell.

### Example Embodiment 3

This embodiments shows exemplary steps for a UE to manage BWPs when it exceeds a maximum number of scheduling request (SR) transmission attempts.

In Step 31, the base station decides, based on information such as BSR sent from the UE, to activate Cell B for the UE. The base station sends a downlink control message (e.g., a MAC CE) to activate Cell B. The first active BWP s-3 will be used by the UE without additional activation.

In Step 32, the base station indicates, over a PDCCH, that Cell B may initiate a RACH procedure for the UE. In some implementations, the UE can initiate the RACH procedure.

In Step 33, the UE performs the RACH procedure in Cell B. The RACH procedure completes successfully and the UE performs transmissions in Cell B using the first active BWP s-3.

In Step 34, the UE needs to send uplink data. However, there is no uplink resources available for the UE. Therefore, the UE starts a SR procedure.

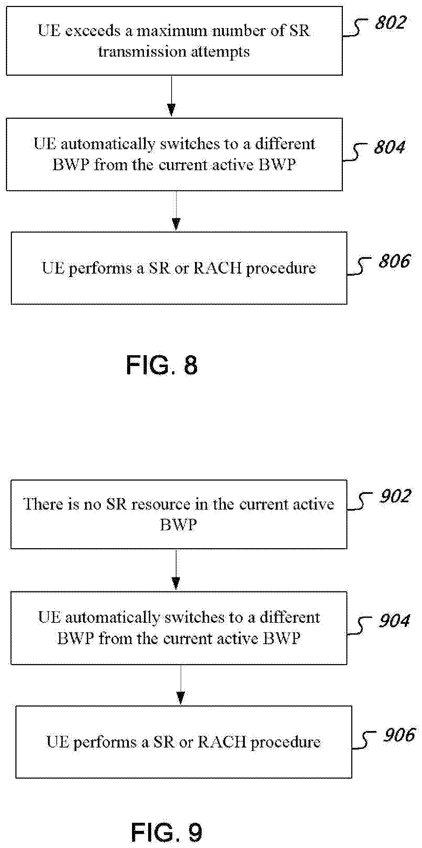

In Step 35, the UE make multiple attempts to transmit the SR. As shown in FIG. 8, after exceeding a maximum number of SR transmission attempts at 802, the UE automatically switches to a different BWP from s-3 at 804. In this particular embodiment, it switches to the default BWP s-1. The UE then, at 806, performs a SR or a RACH procedure in Cell B using the different BWP.

In Step 36, the base station monitors SR messages in both the active BWP s-3 and the default BWP s-1. When the base station detects an SR in the default BWP, the base station schedules uplink resources accordingly.

In some cases, the active BWP is s-4 when the UE starts the SR procedure. When the UE exceeds a maximum number of SR transmission attempts in s-4, it automatically switches to a BWP different from s-4. The different BWP can be the first active BWP s-3, or the default BWP s-1 as described above.

While the above steps describe operations for a secondary cell, they are also applicable to a PCell or a PSCell.

### Example Embodiment 4

This embodiments shows exemplary steps for the UE to manage BWPs when there is a lack of resources in the active BWP.

In Step 41, the base station decides, based on information such as BSR sent from the UE, to activate Cell B for the UE. The base station sends a downlink control message (e.g., a MAC CE) to activate Cell B. The first active BWP s-3 will be used by the UE without additional activation.

In Step 42, the base station indicates, over a PDCCH, that Cell B may initiate a RACH procedure for the UE. In some implementations, the UE can initiate the RACH procedure. If there is no RACH resources in the current BWP s-3 at 902, the UE automatically switches to a BWP different from s-3 at 904. In this particular embodiment, it switches to the default BWP s-1. The UE then, at 906, performs a RACH procedure in Cell B using the default BWP s-1.

In Step 43, the UE performs the RACH procedure in Cell B. The RACH procedure completes successfully and the UE performs transmissions in Cell B using the first active BWP s-3.

In Step 44, the UE needs to send uplink data. However, there is no uplink resources available for the UE. The UE thus starts a SR procedure. As shown in FIG. 9, upon determining that there is no SR resources in the current BWP s-3 at 902, the UE automatically switches to a BWP different from s-3 at 904. In this particular embodiment, it switches to the default BWP s-1. The UE then, at 906, performs a SR or a RACH procedure in Cell B using the default BWP s-1.

In Step 45, the base station detects that the active BWP s-3 of Cell B has no SR resource. The base station then switches to the default BWP s-1 accordingly and schedules uplink transmission for the UE.

In some embodiments, the active BWP is s-4 when the UE starts the SR procedure. When there is no SR resource in s-4, the UE automatically switches to a different BWP from s-4. The different BWP can be the first active BWP s-3, or the default BWP s-1 as described above.

In some embodiments, if the default BWP or the initial/first BWP has no SR resource, Cell B or the UE can initiate a RACH procedure directly.

While the above steps describe operations for a secondary cell, they are also applicable to a PCell or a PSCell.

### Example Embodiment 5

This embodiments shows exemplary steps for a UE to manage BWPs when a cell is activated multiple times by the base station.

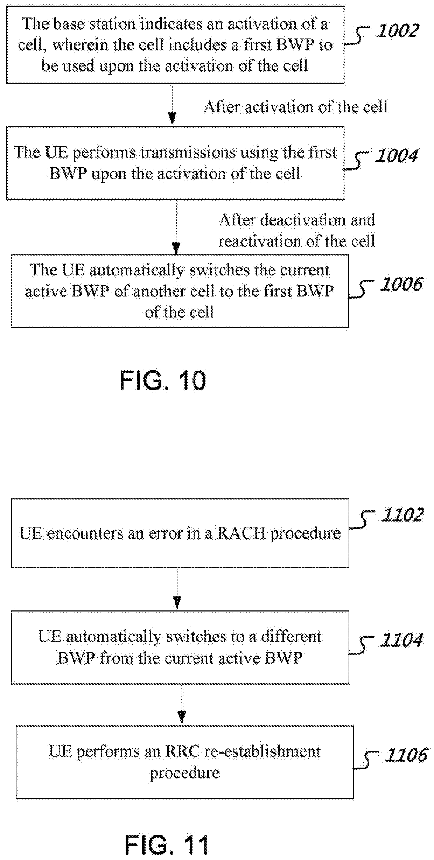

In Step 51, the base station decides, based on information such as BSR sent from the UE, to activate Cell B for the UE. As shown in FIG. 10, the base station, at 1002, sends a downlink control message (e.g., a MAC CE) to activate Cell B. Cell B includes a first active BWP s-3 that will be used by the UE without additional activation.

In Step 52, the base station indicates, over a PDCCH, that Cell B may initiate a RACH procedure for the UE. In some implementations, the UE can initiate the RACH procedure.

In Step 53, the UE performs the RACH procedure in Cell B. After the RACH procedure completes successfully, the UE performs, at 1004, transmissions in Cell B using the first active BWP s-3.

In Step 54, Cell B can be deactivated based on network activities. For example, the base station may send a message, based on the BSR reported by the UE, to deactivate Cell B. The UE may also determines to do so when a deactivation timer expires.

In Step 55, the base station may decide, based on information such as BSR sent from the UE, to activate Cell B again for the UE. The base station sends another DCI message to the UE to activate Cell B. The UE, at 1006, automatically switches from the current active BWP of another cell to s-3 of Cell B. In some embodiments, the DCI message may indicate that the default BWP s-1 is to be used upon the activation of Cell B.

### Example Embodiment 6

This embodiments show exemplary steps for a UE to manage BWPs when a RACH procedure fails.

In Step 61, the UE performs transmission in Cell A. When the UE needs to transmit uplink data, it detects that there is no uplink resources. The UE then initiates a RACH procedure.

In Step 62, as shown in FIG. 11, the UE encounters a failure in the RACH procedure at 1102. The active BWP used for transmission is p-2, so UE, at 1104, automatically switches to a different BWP. In some embodiments, the UE switches to the default BWP p-1.

In Step 63, the UE performs, at 1106, a RRC re-establishment procedure using the different BWP p-1.

### Example Embodiment 7

This embodiments show exemplary steps for a UE to manage BWPs when it receives a handover command from the base station.

In Step 71, the base station decides, based on information such as BSR sent from the UE, to activate Cell B for the UE. The base station sends a downlink control message (e.g., a MAC CE) to activate Cell B. The first active BWP s-3 will be used by the UE without additional activation.

In Step 72, the base station indicates, over a PDCCH, that Cell B may initiate a RACH procedure for the UE. In some implementations, the UE can initiate the RACH procedure.

In Step 73, the UE performs the RACH procedure in Cell B. The RACH procedure completes successfully and the UE performs transmissions in Cell B using the first active BWP s-3.

In Step 74, the base station detects that signal strength in Cell A gets worse. The base station keeps Cell B as the secondary cell, and sends a handover command to the UE to switch the primary cell from Cell A to Cell C.

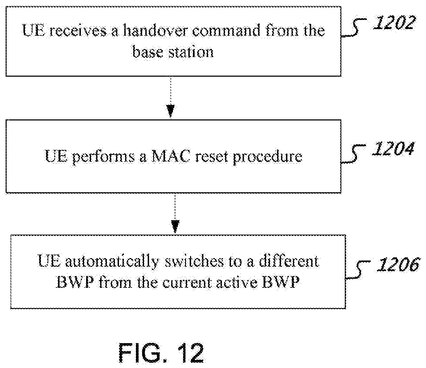

In Step 75, as shown in FIG. 12, the UE receives, at 1202, the handover command from the base station to switch to Cell C. The UE performs, at 1204, a MAC reset procedure. The UE also automatically switches, at 1206, from the active BWP of Cell A to a different BWP, such as the initial active BWP or default BWP of Cell C.

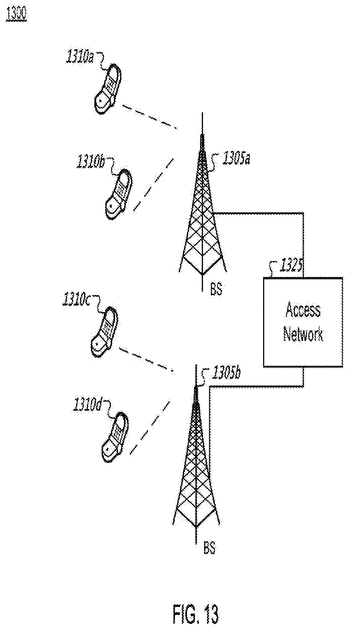

FIG. 13 shows an example of a wireless communication system where techniques in accordance with one or more embodiments of the present technology can be applied. A wireless communication system 400 can include one or more base stations (BSs) 1305a, 1305b, one or more wireless devices 1310a, 1310b, 1310c, 1310d, and an access network 1325. A base station 1305a, 1305b can provide wireless service to wireless devices 1310a, 1310b, 1310c and 1310d in one or more wireless sectors. In some implementations, a base station 1305a, 1305b includes directional antennas to produce two or more directional beams to provide wireless coverage in different sectors.

The access network 1325 can communicate with one or more base stations 1305a, 1305b. In some implementations, the access network 1325 includes one or more base stations 1305a, 1305b. In some implementations, the access network 1325 is in communication with a core network (not shown) that provides connectivity with other wireless communication systems and wired communication systems. The core network may include one or more service subscription databases to store information related to the subscribed wireless devices 1310a, 1310b, 1310c and 1310d. A first base station 1305a can provide wireless service based on a first radio access technology, whereas a second base station 1305b can provide wireless service based on a second radio access technology. The base stations 1305a and 1305b may be co-located or may be separately installed in the field according to the deployment scenario. The access network 1325 can support multiple different radio access technologies.

In some implementations, a wireless communication system can include multiple networks using different wireless technologies. A dual-mode or multi-mode wireless device includes two or more wireless technologies that could be used to connect to different wireless networks.

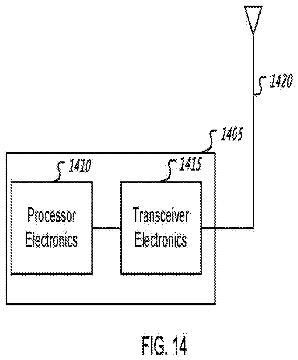

FIG. 14 is a block diagram representation of a portion of a radio station. A radio station 1405 such as a base station or a wireless device (or UE) can include processor electronics 1410 such as a microprocessor that implements one or more of the wireless techniques presented in this document. The radio station 1405 can include transceiver electronics 1415 to send and/or receive wireless signals over one or more communication interfaces such as antenna 1420. The radio station 1405 can include other communication interfaces for transmitting and receiving data. Radio station 1405 can include one or more memories (not explicitly shown) configured to store information such as data and/or instructions. In some implementations, the processor electronics 1410 can include at least a portion of the transceiver electronics 1415. In some embodiments, at least some of the disclosed techniques, modules or functions are implemented using the radio station 1405.

It is thus evident that this patent document describes techniques directed to the management of the bandwidth parts. The disclosed techniques allow a UE or a base station to automatically switch, when a network event occurs or is detected, to a BWP different from the current active BWP for subsequent transmissions in a cell, thereby minimizing signaling overhead or delay when a change of BWP is desirable.

From the foregoing, it will be appreciated that specific embodiments of the presently disclosed technology have been described herein for purposes of illustration, but that various modifications may be made without deviating from the scope of the appended claims.

The disclosed and other embodiments, modules and the functional operations described in this document can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, that is generated to encode information for transmission to suitable receiver apparatus.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

## Claims

1. A method for wireless communication, comprising:
performing, by a user equipment, UE, (1405) a transmission in a serving cell using an active bandwidth part of the serving cell representing a first contiguous subset of physical resource blocks; and
switching, by the UE, to a pre-configured bandwidth part of the serving cell representing a second contiguous subset of physical resource blocks to perform subsequent transmissions upon determining that there is no configured random-access resource available for initiating a random access procedure.

2. The method of claim 1, wherein the pre-configured bandwidth part is an initial bandwidth part of the serving cell.

3. An apparatus (1405) for wireless communication implemented as a user equipment (1405), comprising
a processor (1410); and
a memory including processor executable code, wherein the processor executable code upon execution by the processor configures the processor to:
perform a transmission in a serving cell using an active bandwidth part of the serving cell representing a first contiguous subset of physical resource blocks; and
switch to a pre-configured bandwidth part of the serving cell representing a second contiguous subset of physical resource blocks to perform subsequent transmissions upon determining that there is no configured random-access resource available for initiating a random access procedure.

4. The apparatus (1405) of claim 3, wherein the pre-configured bandwidth part is an initial bandwidth part of the serving cell.

5. A non-transitory computer readable medium having code stored thereon, the code when executed by a processor, causing the processor to implement a method that comprises:
performing, by a user equipment, UE, (1405), a transmission in a serving cell using an active bandwidth part of the serving cell representing a first contiguous subset of physical resource blocks; and
switching, by the UE (1405), to a pre-configured bandwidth part of the serving cell representing a second contiguous subset of physical resource blocks to perform subsequent transmissions upon determining that there is no configured random-access resource available for initiating a random access procedure.

6. The non-transitory computer readable medium of claim 5, wherein the pre-configured bandwidth part is an initial bandwidth part of the serving cell.

## Patentansprüche

1. Verfahren zur drahtlosen Kommunikation, das aufweist:
Durchführen durch ein Benutzergerät, UE, (1405) einer Übertragung in einer bedienenden Zelle unter Verwendung eines aktiven Bandbreitenteils der bedienenden Zelle, der eine erste zusammenhängende Teilmenge von physikalischen Ressourcenblöcken repräsentiert; und
Umschalten durch das UE auf einen vorkonfigurierten Bandbreitenteil der bedienenden Zelle, der eine zweite zusammenhängende Teilmenge von physikalischen Ressourcenblöcken repräsentiert, um nachfolgende Übertragungen durchzuführen, wenn festgestellt wird, dass keine konfigurierte Direktzugriffsressource zum Einleiten eines Direktzugriffsverfahrens verfügbar ist.

2. Verfahren nach Anspruch 1, wobei der vorkonfigurierte Bandbreitenteil ein Anfangsbandbreitenteil der bedienenden Zelle ist.

3. Vorrichtung (1405) zur drahtlosen Kommunikation, die als Benutzergerät (1405) implementiert ist und aufweist:
einen Prozessor (1410); und
einen Speicher mit prozessorausführbarem Code, wobei der prozessorausführbare Code bei Ausführung durch den Prozessor den Prozessor konfiguriert:
eine Übertragung in einer bedienenden Zelle unter Verwendung eines aktiven Bandbreitenteils der bedienenden Zelle durchzuführen, der eine erste zusammenhängende Teilmenge von physikalischen Ressourcenblöcken repräsentiert; und
auf einen vorkonfigurierten Bandbreitenteil der bedienenden Zelle umzuschalten, der eine zweite zusammenhängende Teilmenge von physikalischen Ressourcenblöcken repräsentiert, um nachfolgende Übertragungen durchzuführen, wenn festgestellt wird, dass keine konfigurierte Direktzugriffsressource zur Einleitung eines Direktzugriffsverfahrens verfügbar ist.

4. Vorrichtung (1405) nach Anspruch 3, wobei der vorkonfigurierte Bandbreitenteil ein Anfangsbandbreitenteil der bedienenden Zelle ist.

5. Nichtflüchtiges computerlesbares Medium mit darauf gespeichertem Code, wobei der Code, wenn er von einem Prozessor ausgeführt wird, den Prozessor veranlasst, ein Verfahren zu implementieren, das aufweist:
Durchführen durch ein Benutzergerät, UE, (1405) einer Übertragung in einer bedienenden Zelle unter Verwendung eines aktiven Bandbreitenteils der bedienenden Zelle, der eine erste zusammenhängende Teilmenge von physikalischen Ressourcenblöcken repräsentiert; und
Umschalten durch das UE (1405) auf einen vorkonfigurierten Bandbreitenteil der bedienenden Zelle, der eine zweite zusammenhängende Teilmenge von physikalischen Ressourcenblöcken repräsentiert, um nachfolgende Übertragungen durchzuführen, wenn festgestellt wird, dass keine konfigurierte Direktzugriffsressource zum Einleiten eines Direktzugriffsverfahrens verfügbar ist.

6. Nichtflüchtiges computerlesbares Medium nach Anspruch 5, wobei der vorkonfigurierte Bandbreitenteil ein Anfangsbandbreitenteil der bedienenden Zelle ist.

## Revendications

1. Procédé de communication sans fil, comprenant
l'exécution, par un équipement utilisateur, UE, (1405) d'une transmission dans une cellule de desserte au moyen d'une partie de bande passante active de la cellule de desserte représentant un premier sous-ensemble contigu de blocs de ressources physiques ; et
la commutation, par l'UE, vers une partie de bande passante préconfigurée de la cellule de desserte représentant un deuxième sous-ensemble contigu de blocs de ressources physiques afin d'effectuer des transmissions ultérieures, par détermination qu'aucune ressource d'accès aléatoire configurée n'est disponible pour l'initialisation d'une procédure d'accès aléatoire.

2. Procédé selon la revendication 1, où la partie de bande passante préconfigurée est une partie de bande passante initiale de la cellule de desserte.

3. Appareil (1405) de communication sans fil mis en oeuvre en tant qu'équipement utilisateur (1405), comprenant
un processeur (1410) ; et
une mémoire comprenant un code exécutable par processeur, ledit code exécutable par processeur, lors de son exécution par le processeur, configure le processeur pour :
effectuer une transmission dans une cellule de desserte en utilisant une partie de la bande passante active de la cellule de desserte représentant un premier sous-ensemble contigu de blocs de ressources physiques ; et
passer à une partie préconfigurée de la bande passante de la cellule de desserte représentant un deuxième sous-ensemble contigu de blocs de ressources physiques pour effectuer des transmissions ultérieures après avoir déterminé qu'il n'y a pas de ressource d'accès aléatoire configurée disponible pour lancer une procédure d'accès aléatoire.

4. Appareil (1405) selon la revendication 3, où la partie de bande passante préconfigurée est une partie de bande passante initiale de la cellule de desserte.

5. Support non transitoire lisible par ordinateur sur lequel est enregistré un code dont l'exécution par un processeur entraîne la mise en oeuvre par ledit processeur d'un procédé comprenant :
l'exécution, par un équipement utilisateur, UE, (1405), d'une transmission dans une cellule de desserte au moyen d'une partie de bande passante active de la cellule de desserte représentant un premier sous-ensemble contigu de blocs de ressources physiques ; et
la commutation, par l'UE (1405), vers une partie de bande passante préconfigurée de la cellule de desserte représentant un deuxième sous-ensemble contigu de blocs de ressources physiques afin d'effectuer des transmissions ultérieures, par détermination qu'aucune ressource d'accès aléatoire configurée n'est disponible pour l'initialisation d'une procédure d'accès aléatoire.

6. Support non transitoire lisible par ordinateur selon la revendication 5, où la partie de bande passante préconfigurée est une partie de bande passante initiale de la cellule de desserte.
